**Europäisches Patentamt**

**European Patent Office**

**Office européen des brevets**

(19)

(11) Veröffentlichungsnummer: **0 196 717**
**B1**

(12) **EUROPÄISCHE PATENTSCHRIFT**

(45) Veröffentlichungstag der Patentschrift:
**15.03.89**

(51) Int. Cl.⁴: **C03B 37/016**

(21) Anmeldenummer: **86200483.5**

(22) Anmeldetag: **21.03.86**

(54) **Verfahren und Vorrichtungen zur Herstellung von Glaskörpern.**

(30) Priorität: **29.03.85 DE 3511457**

(43) Veröffentlichungstag der Anmeldung:
**08.10.86 Patentblatt 86/41**

(45) Bekanntmachung des Hinweises auf die Patenterteilung:
**15.03.89 Patentblatt 89/11**

(84) Benannte Vertragsstaaten:
**DE FR GB IT NL SE**

(56) Entgegenhaltungen:
**DE-C- 3 240 355**
**GB-A- 2 067 181**
**GB-A- 2 103 202**

(73) Patentinhaber: **Philips Patentverwaltung GmbH,**
**Wendenstrasse 35 Postfach 10 51 49,**
**D-2000 Hamburg 1(DE)**

(84) Benannte Vertragsstaaten: **DE**

(73) Patentinhaber: **N.V. Philips' Gloeilampenfabrieken,**
**Groenewoudseweg 1, NL-5621 BA Eindhoven(NL)**

(84) Benannte Vertragsstaaten: **FR GB IT NL SE**

(72) Erfinder: **Clasen, Rolf, Dipl.-Phys., Dr.,**
**Schlossparkstrasse 36, D-5100 Aachen(DE)**
Erfinder: **Hermann, Wilhelm Georg, Dr., Mühlenstrasse 1,**
**D-5106 Roetgen(DE)**

(74) Vertreter: **Nehmzow-David, Fritzi-Maria et al, Philips**
**Patentverwaltung GmbH**
**Wendenstrasse 35 Postfach 10 51 49,**
**D-2000 Hamburg 1(DE)**

**Beschreibung**

Die Erfindung bezieht sich auf ein Verfahren zur Herstellung von Glaskörpern, bei dem aus dem Ausgangsmaterial für den Glaskörper in Form einer Suspension mit hochdispersem Feststoffanteil ein poröser Grünkörper geformt und dieser anschließend gereinigt und gesintert wird, wie z.B. aus DE-OS 2 925 309 bekannt ist.

Die Erfindung bezieht sich weiter auf Vorrichtungen zur Durchführung eines solchen Verfahrens.

Das eingangs genannte Verfahren ist insbesondere geeignet zur Herstellung von Vorformen für optische Wellenleiter.

Zur Herstellung von hochreinen Quarzglaskörpern, insbesondere Vorformen für optische Wellenleiter, sind Verfahren bekannt, bei denen ein poröser Grünkörper aus hochdispersen $SiO_2$-Glasteilchen hergestellt wird, wonach dieser poröse Grünkörper zunächst in z.B. einer chlorhaltigen Atmosphäre bei Temperaturen im Bereich von 600 bis 900°C gereinigt wird. Die Sinterung zu kompaktem, transparentem Glas erfolgt dann bei Temperaturen im Bereich um 1500°C; die Höhe der Sintertemperatur ist abhängig von der Größe der $SiO_2$-Teilchen und der Homogenität des Grünkörpers.

Bei der Verarbeitung von hochdispersen Quarzglaspartikeln ist ein erheblicher apparativer Aufwand (Vorformen für die Herstellung eines handhabbaren Grünkörpers und Pressen für die Verdichtung dieses Grünkörpers) erforderlich, um schließlich einen Grünkörper zu erhalten, der die für eine effiziente Sinterung, d.h. Sinterung bei Temperaturen ≤ 1550°C zu einem blasen- und schlierenfreien Glaskörper, ausreichende hohe Dichte aufweist. Ein derartiges Verfahren zur Herstellung einer Vorform für optische Wellenleiter ist z.B. aus DE-PS 3 240 355 bekannt.

Um Grünkörper ausreichender Dichte herstellen zu können, ist es auch bekannt, von hochdispersen $SiO_2$-Suspensionen auszugehen, die zu einem Grünkörper verformt werden. Aus DE-OS 2 925 309 ist ein Verfahren bekannt, bei dem eine $SiO_2$-Suspension in oder auf ein Trägerrohr aufgesprüht wird. Nachteilig bei diesem Verfahren ist, daß einmal hohe Anforderungen an eine gleichmäßig arbeitende Sprühvorrichtung gestellt werden müssen und daß eine Reinigung des erhaltenen Grünkörpers in einer mit den Verunreinigungen reagierenden heißen Gasatmosphäre nicht möglich ist, da das Trägerrohr nicht porös ist.

Der Erfindung liegt die Aufgabe zugrunde, ein Verfahren und Vorrichtungen zur Herstellung von hochreinen Glaskörpern zu schaffen, mit denen ein Grünkörper erhalten wird, der porös genug ist, daß er in einem Zwischenerhitzungsschritt in einer mit vorliegenden Verunreinigungen reagierenden Gasatmosphäre gut gereinigt werden kann, der jedoch schon eine so hohe Verdichtung aufweist, daß der anschließende Sinterschritt ohne zusätzliche Verdichtungsmaßnahmen des Grünkörpers erfolgen kann.

Diese Aufgabe wird mit dem erfindungsgemäßen Verfahren dadurch gelöst, daß der Grünkörper durch Trennung der Phasen der Suspension in einer Vorrichtung, in der sich eine Druckdifferenz aufbauen läßt, auf einer der Form des herzustellenden Glaskörpers entsprechenden porösen Membran mit Poren eines Durchmessers im Bereich zwischen dem 1- und dem 500-fachen des mittleren Teilchendurchmessers des Feststoffanteils der Suspension abgeschieden wird.

Vorrichtungen zur Durchführung dieses Verfahrens sind gekennzeichnet durch

1. ein über einen Pumpstutzen evakuierbares Gefäß, in welchem eine der Form des herzustellenden Glaskörpers entsprechende poröse Membran mit Poren eines Durchmessers im Bereich zwischen dem 1- und dem 500-fachen des mittleren Teilchendurchmessers des Feststoffanteils einer in der Vorrichtung nach Phasen zu trennenden Suspension, vorzugsweise ≤ 20 μm, im Abscheidebereich und mit einem nichtporösen, außerhalb des evakuierbaren Bereiches liegenden, gegen den zu evakuierenden Bereich des Gefäßes durch eine Dichtung abgedichteten Einfüllstutzen, über den nach Phasen zu trennendes Ausgangsmaterial in Form einer Suspension einfüllbar ist, oder

2. ein Gefäß, in das nach Phasen zu trennendes Ausgangsmaterial in Form einer Suspension einfüllbar ist mit einer in die Suspension eintauchenden, der Form des herzustellenden Grünkörpers entsprechenden, über einen Pumpstutzen evakuierbaren porösen Membran mit Poren eines Durchmessers im Bereich zwischen dem 1- und dem 500-fachen des mittleren Teilchendurchmessers des Feststoffanteils einer in der Vorrichtung nach Phasen zu trennenden Suspension, vorzugsweise ≤ 20 μm, im Abscheidebereich.

Nach vorteilhaften Weiterbildungen des Verfahrens nach der Erfindung wird ein Unterdruck oder ein Überdruck in der Vorrichtung erzeugt. Hiermit ist der Vorteil verbunden, daß eine relativ hohe Abscheiderate des Feststoffanteils der Suspension erreicht wird.

Nach vorteilhaften Weiterbildungen des Verfahrens gemäß der Erfindung wird als Ausgangsmaterial für den Glaskörper eine Suspension eingesetzt, die $SiO_2$-Partikel eines Durchmessers im Bereich von 10 bis 500 nm, vorzugsweise 15 bis 100 nm, mit einem mittleren Teilchendurchmesser von 40 nm bei einem Feststoff:Wasser-Gewichtsverhältnis von 1:1 bis 1:2 enthält. Hiermit ist der Vorteil verbunden, daß Grünkörper erreicht werden können mit einer vorteilhaft hohen Dichte, wie sie für den späteren Sinterprozeß des Grünkörpers erforderlich ist.

Nach einer weiteren vorteilhaften Ausgestaltung des Verfahrens nach der Erfindung wird der Suspension ein ionogener Zusatzstoff zugegeben, der den pH-Wert der Suspension in den basischen Bereich (pH ≤ 10) verschiebt, vorzugsweise wird hierzu eine Ammoniumverbindung in einer Menge von 0,1 bis 5 Gew.-%, bezogen auf den Feststoffanteil der Suspension, eingesetzt. Dieser Zusatzstoff ist leicht flüchtig und ist in einem nachfolgenden Reinigungs-Erhitzungsschritt rückstandslos aus dem Grünkörper zu entfernen, so daß Quarzglaskörper einer sehr hohen Reinheit herstellbar sind. Durch den Zusatz einer Ammoniumverbindung, beispielsweise NH₃ in wässeriger Lösung, werden Grünkörper einer relativ hohen Festigkeit erreicht, da sie vernetzungsfördernd wirkt, wobei an den Kontaktstellen zweier SiO₂-Primärpartikel eine Gelbildung auftritt. Bei beispielsweise einer Suspensionstemperatur von 20°C und einem pH-Wert $\leq$ 10 geht SiO₂ in der Größenordnung von etwa 100 ppm in Lösung und wird an den Kontaktstellen ausgeschieden und bildet damit eine Brückenschicht. Wird als ionogener Zusatzstoff z.B. NH₄F in wässeriger Lösung eingesetzt, kann eine Fluordotierung des Ausgangsmaterials zur Verringerung des Brechungsindex erreicht werden. Derartige Gläser sind als Mantelgläser für optische Wellenleiter geeignet.

Nach einer vorteilhaften Weiterbildung des Verfahrens nach der Erfindung wird auf der Membran ein Schichtkörper durch Abscheiden mehrerer Schichten nacheinander aus unterschiedlich dotierten Suspensionen abgeschieden. Dazu wird nach Erreichen einer gewünschten Schichtdicke des Grünkörpers die erste Suspension aus der Vorrichtung entfernt und der Abscheideprozeß mit einer zweiten, z.B. anders als die erste Suspension dotierten Suspension fortgesetzt. Das vorliegende Verfahren ist damit besonders geeignet, Vorformen für optische Wellenleiter herzustellen, die ein Stufenprofil des Brechungsindex aufweisen. Ebenfalls ist es möglich, einen optischen Wellenleiter mit W-Profil durch Einbau einer Zwischenschicht mit niedrigerem Brechungsindex, die durch Anwendung einer Suspension mit entsprechender Dotierung erhalten wird, herzustellen. Dotierstoffe zur Veränderung des Brechungsindex eines Glaskörpers sind dem Fachmann bekannt, beispielsweise werden hierzu zur Erhöhung des Brechungsindex GeO₂ oder Al₂O₃ und zur Erniedrigung des Brechungsindex B₂O₃ oder Fluor verwendet. Mit dem vorliegenden Verfahren ist es auch möglich, durch Abscheidung einer Vielzahl von abgestuft dotierten Schichten einen Quarzglaskörper mit angenähert kontinuierlichem Brechungsindexverlauf herzustellen. Nach einer weiteren vorteilhaften Ausgestaltung des Verfahrens nach der Erfindung wird als Membran ein poröser Grünkörper aus dem Ausgangsmaterial für den herzustellenden Glaskörper eingesetzt. Hiermit ist der Vorteil verbunden, daß für die Herstellung von Vorformen für optische Wellenleiter nach dem erfindungsgemäßen Verfahren artfremde Materialien für die Membran vermieden werden können, die eventuell zu Verunreinigungen des erhaltenen Grünkörpers führen können, wobei auch auf diese Weise hochpräzise optische Wellenleiter geschaffen werden können mit einem Stufenprofil des Brechungsindex. Bei dieser Abwandlung des erfindungsgemäßen Verfahrens werden Membran und abgeschiedener Grünkörper gemeinsam in einem Reinigungsschritt in einer geeigneten erhitzten Gasatmosphäre gereinigt und anschließend gemeinsam zu einem transparenten Glaskörper gesintert. Statt eines porösen, noch nicht gesinterten Körpers aus dem Ausgangsmaterial für den Glaskörper (Grünkörper) kann auch ein poröser, angesinterter Körper aus dem Ausgangsmaterial für den Glaskörper als Membran eingesetzt werden. Hierbei ist besonders vorteilhaft, daß Schichten aus dem Feststoffanteil der Suspension mit einer gegenüber der für die Herstellung einer solchen Membran verwendeten Kornfraktion geänderten Kornfraktion hergestellt werden können. Von der Kornfraktion ist das Schwindungsverhalten eines Körpers abhängig; wenn als Membran ein bereits angesinterter Körper aus dem Ausgangsmaterial für den Glaskörper verwendet wird, ist es möglich, die Membran und die auf ihr abzuscheidende Schicht in ihren Schwindungsverhalten einander anzupassen.

Wird der Grünkörper nach einer vorteilhaften Weiterbildung des Verfahrens nach der Erfindung auf einer Membran abgeschieden, deren Abscheideoberfläche mit einem Futter insbesondere aus Kunststoff ausgekleidet ist, das eine Porosität $\leq$ dem mittleren Teilchendurchmesser des Feststoffanteils der Suspension aufweist, wobei insbesondere eine Kunststoffmembran aus vorzugsweise Polyäthylen eines Porendurchmessers im Bereich von 10 bis 20 μm eingesetzt wird, ergibt sich der Vorteil, daß eine Entfernung auch größerer Grünkörper problemlos vorgenommen werden kann. Für das Futter wird vorzugsweise ein hydrophiler Kunststoff eingesetzt.

Bei größeren Abmessungen des Grünkörpers kann es vorteilhaft sein, statt einer einteiligen eine teilbare, mehrteilige Membran einzusetzen.

Die mit der Erfindung erzielbaren Vorteile bestehen weiter insbesondere darin, daß für die Herstellung von Glaskörpern, insbesondere Vorformen für optische Wellenleiter, mit einem sehr geringen apparativen Aufwand Grünkörper erhalten werden können, die einerseits porös genug sind, daß Verunreinigungen in einer erhitzten Gasatmosphäre wirkungsvoll entfernt werden können, die andererseits jedoch eine so hohe Dichte und Homogenität aufweisen, daß sie ohne weitere Zwischenbearbeitungsschritte, wie z.B. isostatisches Heißpressen, zu hochreinen Glaskörpern gesintert werden können. Ein weiterer großer Vorteil des Verfahrens der vorliegenden Erfindung ist, daß Grünkörper hergestellt werden können, die einen von einem kreisförmigen Querschnitt abweichenden Querschnitt aufweisen; zu denken ist z.B. an eckige Rohre oder Stäbe oder auch an beliebig geformte Hohlkörper. Die abgeschiedenen Grünkörper lassen sich rißfrei trocknen und ergeben nach dem Reinigungs- und Sinterschnitt maßtreue, transparente und hochreine Gläser mit hochglatten Oberflächen. Weiter ist es auch möglich, auf die beschriebene Weise hergestellte Quarzglasrohre bei der Herstellung von Halogen- oder Gasentladungslampen einzusetzen, wo ebenfalls, wie auch für Grünkörper, die für die Herstellung von optischen Wellenleitern verwendet werden sollen, ein sehr niedriger Wassergehalt und ein hoher Siliciumdioxidgehalt gefordert ist.

Durch das Abtrennen der Dispergierflüssigkeit von der festen Phase der Suspension über die Druckdifferenz in der Vorrichtung bildet sich ein relativ trockener, fester Grünkörper, einer Dichte im Bereich von 38–50% der Dichte kompaktem Glases, der gut handhabbar ist und der, ohne daß die Gefahr einer Rißbildung auftritt, in relativ kurzer Zeit von der geringen verbliebenen Restfeuchte befreit werden kann, z.B. durch Trocknen unter atmosphärischen Bedingungen oder durch Lösungsmittelaustausch. Diese Trockenprozesse sind dem einschlägig tätigen Fachmann vertraut.

Wird eine Membran mit einer Porengröße von 10 bis 20 $\mu$m zur Abscheidung des Feststoffes aus der Suspension, der einen mittleren Teilchendurchmesser von 40 nm hat, eingesetzt, bildet die zu Beginn des Abscheideprozesses auf der Membran abgeschiedene Schicht eine zusätzliche Feinfilterschicht, die ein weiteres Eindringen von Feststoffpartikeln aus der Suspension in die Membran verhindert.

Dieser Effekt einer zusätzlichen Feinfilterschicht kann auch erreicht werden, wenn die Membran an ihrer Abscheideoberfläche mit einem Futter ausgekleidet wird, das eine Porosität mit einer Porengröße $\leq$ dem mittleren Teilchendurchmesser des Feststoffanteils der Suspension aufweist. Ein solches Futter wird zweckmäßigerweise aus einem hydrophilen Kunststoff hergestellt.

Ausführungsbeispiele der Erfindung sind in der Zeichnung dargestellt und werden im folgenden näher beschrieben. Es zeigen:

Fig. 1 Vorrichtung zur Durchführung des Verfahrens nach der Erfindung im Schnitt zur Herstellung von rohrförmigen Grünkörpern,

Fig. 2 Abwandlung der Vorrichtung gemäß Figur 1 im Schnitt zur Herstellung von stabförmigen Grünkörpern,

Fig. 3 Eine weitere Vorrichtung zur Durchführung des Verfahrens nach der Erfindung im Schnitt.

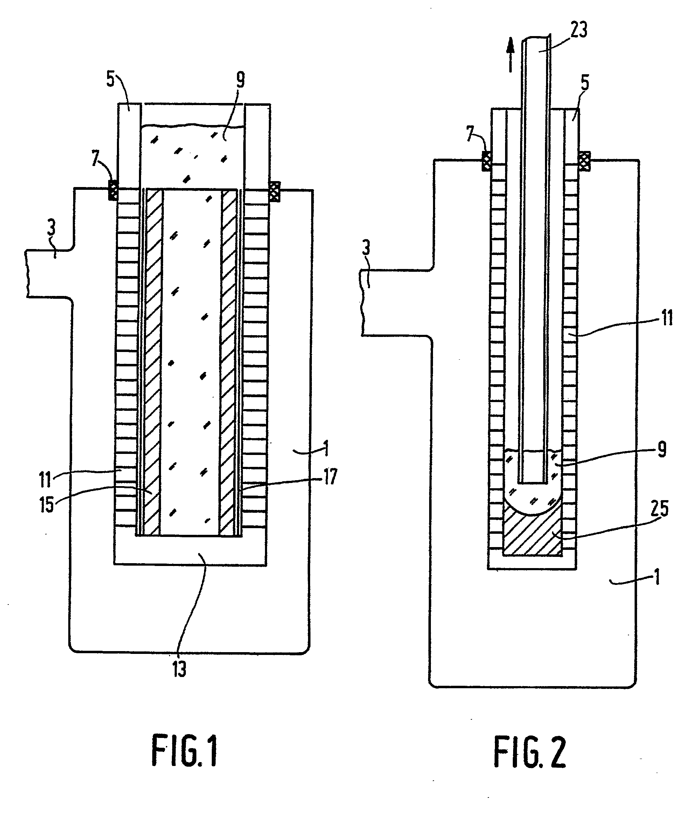

In Figur 1 ist eine Vorrichtung zur Herstellung eines rohrförmigen Grünkörpers 15 dargestellt. Dazu wird eine, z.B. in einem Ultraschallfeld homogenisierte, vorzugsweise wässerige Suspension aus hochdispersen $SiO_2$-Teilchen eines Teilchendurchmessers im Bereich von 10 bis 500 nm, vorzugsweise 15 bis 100 nm, mit einem mittleren Teilchendurchmesser von 40 nm, mit Wasser als Dispergierflüssigkeit (Feststoff-Wasser-Gewichtsverhältnis 1:1 bis 1:2), der $NH_3$ in wässeriger Lösung in einer Menge von 0,1 bis 5 Gew.-%, bezogen auf den Feststoffanteil der Suspension zugesetzt ist, in eine rohrförmige Membran 11 eines Innendurchmessers von 24 mm, die im Abscheidungsbereich des Grünkörpers 15 Poren einer Porengröße $\leq$ 20 $\mu$m aufweist, eingefüllt. Die Membran 11 steckt, abgedichtet über eine Dichtung 7, in einem Gefäß 1, das über einen Pumpstutzen 3 evakuierbar ist. Der Druck sollte vorzugsweise dem Partialdruck der Dispergierflüssigkeit entsprechen, um eine möglichst hohe Abscheiderate an Feststoff zu erreichen. Zur einfacheren Entformung des erhaltenen Grünkörpers 15 kann ein feinstporiger Schlauch mit vorzugsweise Poren eines Durchmessers $\leq$ 40 nm als Futter 17 eingelegt sein. Ein solches Futter kann z.B. durch einen Kunststoffschlauch gebildet werden, wie er für Dialyseverfahren eingesetzt wird. Zu bevorzugen sind hydrophile Kunststoffe, beispielsweise oberflächenmodifiziertes Polyäthylen.

In einem praktischen Ausführungsbeispiel unter Anwendung einer Vorrichtung nach Figur 1 wurde wie folgt verfahren: 200 g von im Handel erhältlichem $SiO_2$ einer Teilchengröße von 15–100 nm mit einem mittleren Teilchendurchmesser von 40 nm werden in 300 ml Wasser und 7 ml wässeriger 25%iger Ammoniaklösung dispergiert, bis eine homogene Suspension erreicht wird. Eine Homogenisierung kann z.B. durch Einkoppeln eines Ultraschallfeldes mit einer Frequenz f = 35 kHz in die Suspension erreicht werden. Diese Suspension wird wie zu Figur 1 beschrieben nach Phasen getrennt durch Erzeugen eines Unterdrucks von 15 mbar. Der nach einer Abscheidungsdauer von 15 min erhaltene Grünkörper wird zur Entfernung der Restfeuchte in der Vorrichtung langsam getrocknet.

Der auf diese Weise erhaltene Grünkörper weist eine Dichte von 42% der Dichte kompakten Quarzglases auf. Anschließend wird der Grünkörper in 100 min auf eine Temperatur von 800°C erhitzt und zur Entfernung von Verunreinigungen, insbesondere Wasser und Übergangsmetalle, 1,5 h einem mit $SOCl_2$ gesättigten $O_2$-Gasstrom ausgesetzt. Die anschließende Sinterung erfolgt bei 1500°C in Heliumatmosphäre mit 2 Vol.-% Chlorgaszusatz, wobei der Grünkörper mit einer Absenkgeschwindigkeit von 3mm/min durch den Ofen geführt wird. Es wird ein transparentes Glasrohr eines Außendurchmessers von 18 mm und einer Wandstärke von 3 mm mit Verunreinigungen < 10 ppb erhalten. Das auf diese Weise hergestellte Glas hatte eine Dichte von 2,20 g/cm³ und einen Brechungsindex $n_D$=1,4598.

Nach dem beschriebenen Verfahren ist es ebenfalls möglich, Schichtstrukturen aus unterschiedlich dotierten $SiO_2$-Suspensionen zu erzeugen. Dazu wird die Suspension nach Erreichen der gewünschten Schichtdicke schnell aus der Vorrichtung abgesaugt und durch eine neue, anders dotierte Suspension ersetzt. Auf diese Weise lassen sich Grünkörper formen, die nach dem Sintern Gläser mit einem Brechungsindexgradienten ergeben.

In Figur 2 ist eine Vorrichtung dargestellt, mit der sich analog zu dem gemäß Figur 1 beschriebenen Verfahren ein stabförmiger Grünkörper 25 aus der Suspension 9 herstellen läßt. Über ein in Achsrichtung der Membran in Form des Rohres 11 verschiebbares Einfüllrohr 23 wird die homogenisierte Suspension 9 in das Rohr 11 eingeleitet. Durch Abscheidung von $SiO_2$-Partikeln im gesamten Rohrquerschnitt wächst ein stabförmiger Grünkörper 25 an. Das Einfüllrohr 23 wird synchron mit dem Wachstum des Grünkörpers 25 hochgezogen. Dadurch, daß die Suspension 9 über das verschiebbare Einfüllrohr 23 in das Rohr 11 eingeleitet wird, ergibt sich die Möglichkeit, den Abscheidungsprozeß so zu steuern, daß im unteren Bereich stets die höchste Konzentration an Feststoff innerhalb der in der Vorrichtung enthaltenen Suspension vorliegt, so daß ein kompakter Grünkörper anwachsen kann.

Die angewendete Suspension, die Abscheidebedingungen wie auch die Nachbearbeitung des erhaltenen Grünkörpers sowie die Eigenschaften des erhaltenen Quarzglaskörpers entsprechen dem zu Figur 1 beschriebenen Beispiel, nur die Abscheidedauer betrug bei diesem Beispiel 120 min, da ein massiver Stab abgeschieden wurde.

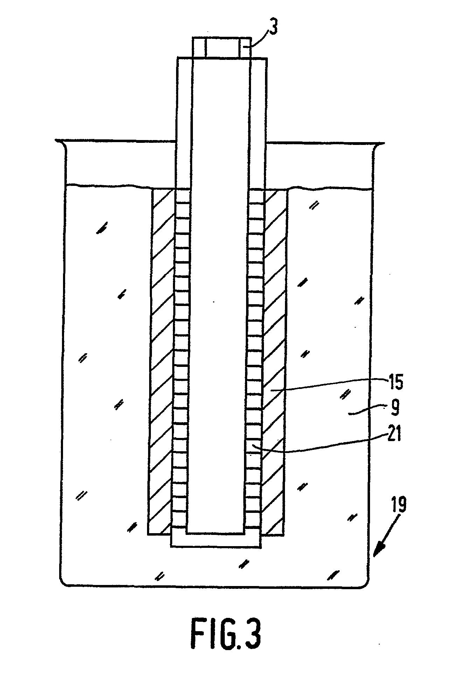

Ein z.B. rohrförmiger Grünkörper 15 läßt sich auch auf der Außenseite einer z.B. zylinderförmigen Membran 21, die im Abscheidebereich porös ist, herstellen (vergleiche Figur 3). Hierzu wird die homogenisierte Suspension 9 in ein Gefäß 19 eingefüllt und die Membran 21, die in die Suspension 9 eintaucht, wird über den Pumpstutzen 3 von innen evakuiert.

Die angewendete Suspension, die Abscheidebedingungen wie auch die Nachbearbeitung des erhaltenen Grünkörpers sowie die Eigenschaften des erhaltenen Quarzglaskörpers entsprechen ebenfalls dem zu Figur 1 beschriebenen Beispiel.

Als Membran kann mit Vorteil ein poröser Grünkörper aus dem Ausgangsmaterial für den Glaskörper eingesetzt werden, wobei dieser Grünkörper auch bereits angesintert sein kann. Als Membran können jedoch auch z.B. Filterrohre aus Polyäthylen mit einem Porendurchmesser im Bereich von 10 bis 20 µm verwendet werden. Wenn solche Kunststoffmembranen zusätzlich mit einem porösen Futter einer Porengröße ≤ 40 nm, insbesondere aus einem hydrophilen Kunststoff im Abscheidebereich ausgestattet werden, ergibt sich der Vorteil, daß die erhaltenen Grünkörper eine besonders glatte Oberfläche mit einer Oberflächenrauhigkeit < 1 µm, vorzugsweise sogar < 0,5 µm, aufweisen. Derartige glatte Oberflächen sind deswegen besonders vorteilhaft, weil damit eine störende Rekristallisation bei der Sinterung der Grünkörper vermieden werden kann.

## Patentansprüche

1. Verfahren zur Herstellung von Glaskörpern, bei dem aus dem Ausgangsmaterial für den Glaskörper in Form einer Suspension (9) mit hochdispersem Feststoffanteil ein poröser Grünkörper (15, 25) geformt und dieser anschließend gereinigt und gesintert wird, dadurch gekennzeichnet, daß der Grünkörper durch Trennung der Phasen der Suspension in einer Vorrichtung, in der sich eine Druckdifferenz aufbauen läßt, auf einer der Form des herzustellenden Glaskörpers entsprechenden porösen Membran (11, 21) mit Poren eines Durchmessers im Bereich zwischen dem 1- und 500-fachen des mittleren Teilchendurchmessers des Feststoffanteils der Suspension abgeschieden wird.

2. Verfahren nach Anspruch 1, dadurch gekennzeichnet, daß ein Unterdruck in der Vorrichtung erzeugt wird.

3. Verfahren nach Anspruch 1, dadurch gekennzeichnet, daß ein Überdruck in der Vorrichtung erzeugt wird.

4. Verfahren nach einem der Ansprüche 1 bis 3, dadurch gekennzeichnet, daß als Ausgangsmaterial für den Glaskörper eine wässerige Suspension (9) eingesetzt wird, die SiO$_2$-Partikel eines Durchmessers im Bereich von 10 bis 500 nm, vorzugsweise 15 bis 100 nm, mit einem mittleren Teilchendurchmesser von 40 nm enthält.

5. Verfahren nach einem der Ansprüche 1 bis 4, dadurch gekennzeichnet, daß eine Suspension (9) mit einem Feststoff:Wasser-Gewichtsverhältnis von 1:1 bis 1:2 eingesetzt wird.

6. Verfahren nach den Ansprüchen 4 und 5, dadurch gekennzeichnet, daß der Suspension (9) ein ionogener Zusatzstoff zugegeben wird, der den pH-Wert der Suspension in den basischen Bereich (pH ≤ 10) verschiebt.

7. Verfahren nach Anspruch 6, dadurch gekennzeichnet, daß als ionogener Zusatzstoff eine Ammoniumverbindung zugesetzt wird.

8. Verfahren nach Anspruch 6 oder 7, dadurch gekennzeichnet, daß der ionogene Zusatzstoff in einer Menge von 0,1 bis 5 Gew.-%, bezogen auf den Feststoffanteil der Suspension (9), zugegeben wird.

9. Verfahren nach einem der Ansprüche 1 bis 8, dadurch gekennzeichnet, daß auf der Membran (11, 21) ein Schichtkörper durch Abscheiden mehrerer Schichten nacheinander aus unterschiedlich dotierten Suspensionen (9) abgeschieden wird.

10. Verfahren nach Anspruch 9, dadurch gekennzeichnet, daß Suspensionen (9) mit Dotierstoffen eingesetzt werden, die unterschiedliche Brechungsindices des herzustellenden Glaskörpers bewirken.

11. Verfahren nach Anspruch 1, dadurch gekennzeichnet, daß als Membran (11, 21) ein poröser Grünkörper aus dem Ausgangsmaterial für den herzustellenden Glaskörper eingesetzt wird.

12. Verfahren nach Anspruch 1, dadurch gekennzeichnet, daß der Grünkörper (15, 25) auf einer Membran (11) abgeschieden wird, deren Abscheideoberfläche mit einem Futter (17), insbesondere aus Kunststoff, ausgekleidet ist, das eine Porosität kleiner als oder gleich dem mittleren Teilchendurchmesser des Feststoffanteils der Suspension (9) aufweist.

13. Verfahren nach Anspruch 1, dadurch gekennzeichnet, daß eine Kunststoffmembran (11, 21), vorzugsweise aus Polyäthylen, eingesetzt wird.

14. Verfahren nach einem der Ansprüche 1 bis 13, dadurch gekennzeichnet, daß eine Membran (11, 21) mit Poren eines Durchmessers ≤ 20 µm eingesetzt wird.

15. Verfahren nach einem der Ansprüche 1 bis 14, dadurch gekennzeichnet, daß in der Vorrichtung ein Unterdruck bis 15 mbar oder ein Überdruck bis 10 bar erzeugt wird.

16. Vorrichtung zur Durchführung des Verfahrens nach den Ansprüchen 1 bis 15 gekennzeichnet durch ein über einen Pumpstutzen (3) evakuierbares Gefäß (1), in welchem eine der Form des herzustellenden Glaskörpers entsprechende poröse Membran (11) mit Poren eines Durchmessers im Bereich zwischen dem 1- und 500-fachen des mittleren Teilchendurchmessers des Feststoffanteils einer in der Vorrichtung nach Phasen zu trennenden Suspension, vorzugsweise ≤ 20 µm, im Abscheidebereich und mit einem nichtporösen, außerhalb des evakuierbaren Bereiches liegenden, gegen den zu evakuierenden Bereich des Gefäßes durch eine Dichtung (7) abgedichteten Einfüllstutzen (5), über den nach Phasen zu trennendes Ausgangsmaterial in Form einer Suspension (9) einfüllbar ist.

17. Vorrichtung nach Anspruch 16, dadurch gekennzeichnet, daß die Membran ein Zylinder (11) mit einem nichtporösen Boden (13) ist, in welchem ein rohrförmiger Grünkörper (15) abscheidbar ist.

18. Vorrichtung nach Anspruch 16, dadurch gekennzeichnet, daß die Membran an ihrer Abscheidefläche mit einem Futter, insbesondere aus einem hydrophilen Kunststoff, (17) ausgekleidet ist, das eine Porosität kleiner als oder gleich dem mittleren Teilchendurchmesser des Feststoffes der Suspension (9) aufweist.

19. Vorrichtung nach einem der Ansprüche 16 bis 18, dadurch gekennzeichnet, daß innerhalb der Membran in Form des Zylinders (11) ein in Achsrichtung des Zylinders (11) verschiebbares Einfüllrohr (23) vorgesehen ist, über welches die Suspension (9) zur Abscheidung eines stabförmigen Grünkörpers (25) in die Membran einfüllbar ist.

20. Vorrichtung zur Durchführung des Verfahrens nach den Ansprüchen 1 bis 15 gekennzeichnet durch ein Gefäß (19), in das nach Phasen zu trennendes Ausgangsmaterial in Form einer Suspension (9) einfüllbar ist mit einer in die Suspension (9) eintauchenden, der Form des herzustellenden Grünkörpers (15) entsprechenden, über einen Pumpstutzen (3) evakuierbaren porösen Membran (21) mit Poren eines Durchmessers im Bereich zwischen 1- und 500-fachen des mittleren Teilchendurchmessers des Feststoffanteils einer in der Vorrichtung nach Phasen zu trennenden Suspension, vorzugsweise ≤ 20 µm, im Abscheidebereich.

21. Vorrichtung nach Anspruch 20, dadurch gekennzeichnet, daß die Membran ein Zylinder (21) ist, auf welchem ein rohrförmiger Grünkörper (15) abscheidbar ist.

22. Vorrichtung nach einem der Ansprüche 16 bis 21, dadurch gekennzeichnet, daß die Membran ein poröser Grünkörper aus dem Ausgangsmaterial für den herzustellenden Glaskörper ist.

## Revendications

1. Procédé pour la fabrication de corps en verre, selon lequel un corps vert poreux (15, 25) est formé à partir du matériau de départ pour le corps en verre sous forme d'une suspension (9) contenant une part en matière solide fortement dispersée et celui-ci est ensuite purifié et fritté, caractérisé en ce que le corps vert peut être déposé par séparation des phases de la suspension dans un dispositif dans lequel peut être formée une différence de pression sur une membrane poreuse (11, 21) correspondant à la forme du corps vert à réaliser et présentant des pores d'un diamètre compris entre 1 et 500 fois le diamètre moyen des particules de la part de matière solide de la suspension.

2. Procédé selon la revendication 1, caractérisé en ce qu'une dépression est réalisée dans le dispositif.

3. Procédé selon la revendication 1, caractérisé en ce qu'une surpression est réalisée dans le dispositif.

4. Procédé selon l'une des revendications 1 à 3, caractérisé en ce que comme matériau de départ pour le corps en verre, on utilise une suspension aqueuse (9) contenant des particules de $SiO_2$ d'un diamètre compris entre 10 et 500 nm, de préférence 15 à 100 nm, le diamètre moyen des particules étant de 40 nm.

5. Procédé selon l'une des revendications 1 à 4, caractérisé en ce qu'on utilise une suspension (9) présentant un rapport en poids en matière solide:eau de 1:1 à 1:2.

6. Procédé selon la revendication 4 et 6, caractérisé en ce que la suspension (9) est additionnée d'une substance d'addition ionogène qui décale la valeur pH de la suspension dans la gamme basique (pH ≤ 10).

7. Procédé selon la revendication 6, caractérisé en ce que comme substance d'addition ionogène, on utilise un composé d'ammonium.

8. Procédé selon la revendication 6 ou 7, caractérisé en ce que la substance d'addition ionogène est ajoutée dans une quantité de 0,1 à 5% en poids rapporté à la part en matière solide de la suspension (9).

9. Procédé selon l'une des revendications 1 à 8, caractérisé en ce que sur la membrane (11, 21) est séparé un corps de couches par séparation successive de plusieurs couches en suspensions (9) présentant des dopages différents.

10. Procédé selon la revendication 9, caractérisé en ce qu'on utilise des suspensions (9) contenant des substances de dopage qui provoquent des indices de réfraction différents des corps en verre à réaliser.

11. Procédé selon la revendication 1, caractérisé en ce que comme membrane (11, 21) on utilise un corps vert poreux en le matériau de départ du corps en verre à réaliser.

12. Procédé selon la revendication 1, caractérisé en ce que le corps vert (15 ou 25) est séparé sur une membrane (11) dont la surface de séparation est revêtue d'une couche (17), notamment en matière synthétique qui présente une porosité inférieure ou égale au diamètre moyen des particules de la part en matière solide de la suspension (9).

13. Procédé selon la revendication 1, caractérisé en ce qu'on utilise une membrane en matière synthétique (11, 21), de préférence en polyéthylène.

14. Procédé selon l'une des revendications 1 à 13, caractérisé en ce qu'on utilise une membrane (11, 21) présentant des pores d'un diamètre ≤ 20 µm.

15. Procédé selon l'une des revendications 1 à 14, caractérisé en ce que dans le dispositif est réalisé une dépression jusqu'à 15 mbars ou une surpression jusqu'à 10 bars.

16. Dispositif pour la mise en œuvre du procédé selon la revendication 1 à 15, caractérisé en ce qu'un récipient (1) pouvant être évacué à l'aide d'un raccord de pompage (3), dans lequel est présente une membrane poreuse (11) correspondant à la forme du corps en verre à réaliser et présentant des pores d'un diamètre situé dans la gamme comprise entre 1 et 500 fois le diamètre moyen des particules de la part de matière solide d'une suspension à séparer suivant les phases dans le dispositif de pré-

férence ≤ 20 μm, dans la zone de dépôt et comportant un raccord de remplissage non poreux (5) situé en dehors de la zone à évacuer et fermé par un joint (7) par rapport à la zone à évacuer du récipient par lequel le matériau de départ sous forme d'une suspension (9) à séparer suivant les phases peut être introduit.

17. Dispositif selon la revendication 16, caractérisé en ce que la membrane est un cylindre (11) présentant un fond non poreux (13) dans lequel peut être séparé un corps vert tubulaire (15).

18. Dispositif selon la revendication 16, caractérisé en ce que la surface de séparation de la membrane est revêtue d'un couche, notamment en une matière synthétique hydrophile (17), qui présente une porosité inférieure ou égale au diamètre moyen des particules de la matière solide de la suspension (9).

19. Dispositif selon l'une des revendications 16 à 18, caractérisé en ce que dans la membrane sous forme de cylindre (11) est disposé dans la direction axiale du cylindre un tube de remplissage déplaçable (23) par lequel la suspension (9) pour la séparation d'un corps vert en forme de barre (25) peut être introduite dans la membrane.

20. Dispositif pour la mise en œuvre du procédé selon la revendication 1 à 15, caractérisé en ce qu'un récipient (19) dans lequel le matériau de départ sous forme d'une suspension (9) à séparer suivant les phases peut être introduit avec une membrane poreuse (21) pouvant être évacuée par l'intermédiaire des raccords de pompage (3) correspondant à la forme du corps vert à réaliser et plongeant dans la suspension (9), présentant des pores d'un diamètre situé dans la gamme comprise entre 1 et 500 fois le diamètre moyen des particules de la part de matière solide d'une suspension à séparer suivant les phases dans le dispositif, de préférence ≤ 20 μm, dans la zone de dépôt.

21. Dispositif selon la revendication 20, caractérisé en ce que la membrane est un cylindre (21) sur lequel peut être déposé un corps vert tubulaire (15).

22. Dispositif selon l'une des revendications 16 à 21, caractérisé en ce que la membrane est un corps vert poreux en matériau de départ pour le corps en verre à réaliser.

## Claims

1. A method of manufacturing glass bodies, in which the starting material for the glass body, being a suspension (9) having a microdispersed solids content, is used to form a porous green body (15, 25) which is subsequently purified and sintered, characterized in that by separating the phases of the suspension in an arrangement in which a pressure difference can be built up, the green body is deposited on a porous membrane whose shape corresponds to that of the glass body to be produced, the pores of the membrane (11, 21) having a diameter in the range from 1 to 500 times the average particle diameter of the solids content of the suspension.

2. A method as claimed in Claim 1, characterized in that an underpressure is procuced in the arrangement.

3. A method as claimed in Claim 1, characterized in that an overpressure is produced in the arrangement.

4. A method as claimed in any one of the Claims 1 to 3, characterized in that an aqueous suspension (9) is used as the starting material for the glass body, which suspension comprises $SiO_2$ particles having a diameter in the range from 10 to 500 nm, preferably 15 to 100 nm, the average particle diameter being 40 nm.

5. A method as claimed in any one of the Claims 1 to 4, charcterized in that a suspension (9) is used having a solid:water weight ratio of from 1:1 to 1:2.

6. A method as claimed in Claim 4 and 5, characterized in that an ionogenic additive is added to the suspension (9), thereby moving the pH value of the suspension towards alkalinity (pH ≤ 10).

7. A method as claimed in Claim 6, characterized in that an ammonia compound is used as the ionogenic additive.

8. A method as claimed in Claim 6 or 7, characterized in that the ionogenic additive is added in quantity of from 0.1 to 5% by weight of the solids content of the suspension (9).

9. A method as claimed in any one of the Claims 1 to 8, characterized in that a laminated body is formed on the membrane (11, 21) by depositing in succession various layers of differently doped suspensions (9).

10. A method as claimed in Claim 9, characterized in that suspensions (9) are used having dopants which cause the glass body to be produced to have different refractive indices.

11. A method as claimed in Claim 1, characterized in that a porous green body made of the starting material for the glass body to be produced is used as the membrane (11, 21).

12. A method as claimed in Claim 1, characterized in that the green body (15, 25) is deposited on a membrane (11) whose deposition area is coated with a lining (17), particularly a synthetic resin lining, having a porosity ≤ the average particle diameter of the solids content of the suspension (9).

13. A method as claimed in Claim 1, characterized in that a synthetic resin membrane (11, 21), preferably of polyethylene, is used.

14. A method as claimed in any one of the Claims 1 to 13, characterized in that a membrane (11, 21) is used whose pores have a diameter ≤ 20 μm.

15. A method as claimed in any one of the Claims 1 to 14, characterized in that an underpressure up to 15 mbar or an overpressure up to 10 bar is produced in the arrangement.

16. A device for carrying out the method in accordance with Claims 1 to 15, characterized by a vessel (1) which can be evacuated via a nozzle (3) and in which a porous membrane (11) whose shape corresponds to that of the glass body to be produced is arranged, which membrane has pores of a diameter in the range between 1 and 500 times the average particle diameter of the solids content of a suspension to be separated in phases in the arrangement, said pores being preferably ≤ 20 μm in the deposition area, and which membrane has a nonporous inlet (5) via which the starting material which is to be separated in phases can be introduced in the form of a suspension (9), which inlet is situated outside the evacuation area of the vessel and is sealed from said evacuation area by sealing means (7).

17. A device as claimed in Claim 16, characterized in that the membrane is a cylinder (11) having a nonporous bottom (13), in which a tubular green body (15) can be deposited.

18. A device as claimed in Claim 16, characterized in that at the location of its deposition area the membrane is coated with a lining, particularly, of a hydrophilic synthetic resin (17), having a porosity ≤ the average particle diameter of the solids content of the suspension.

19. A device as claimed in any of the Claims 16 to 18, characterized in that a filling tube (23) which can be moved along the axis of the cylinder (11) is provided inside the cylindrical membrane (11), via which tube the suspension (9) for the deposition of a rod-shaped green body (25) can be introduced into the membrane.

20. A device for carrying out the method as claimed in Claims 1 to 15, characterized by a vessel (19) into which starting material which is to be separated into phases can be introduced in the form of a suspension (9), and which has a porous membrane (21) whose shape corresponds to that of the green body (15) to be produced and which is immersed in the suspension (9) and can be evacuated via a nozzle (3), the pores of the membrane having a diameter in the range between 1 and 500 times the average particle diameter of the solids content of a suspension to be separated into phases in the arrangement, said pores being preferably ≤ 20 μm in the deposition area.

21. A device as claimed in Claim 20, characterized in that the membrane is a cylinder (21) onto which a tubular green body (15) can be deposited.

22. A device as claimed in any one of the Claims 16 to 21, characterized in that the membrane is a porous green body made of the starting material for the glass body to be produced.

FIG.1

FIG.2

FIG.3